# EUROPÄISCHE PATENTSCHRIFT

(11) **EP 3 606 784 B1**
(45) Veröffentlichungstag und Bekanntmachung des Hinweises auf die Patenterteilung: **04.05.2022**
(21) Anmeldenummer: 17719503.9
(22) Anmeldetag: 05.04.2017
(51) Int. Cl.: B60L 53/35, H01R 4/46, H01R 11/26

(54) **KONTAKTVORRICHTUNG FÜR EIN BATTERIEELETRISCHES FAHRZEUG**
CONTACT DEVICE FOR A BATTERY ELECTRIC VEHICLE
DISPOSITIV DE CONTACT POUR UN VÉHICULE À BATTERIE ÉLECTRIQUE

(43) Veröffentlichungstag der Anmeldung: 12.02.2020
(73) Patentinhaber: Schunk Transit Systems GmbH, 35435 Wettenberg (DE)
(72) Erfinder: SCHNEIDER, Peter, 35112 Fronhausen (DE)
(74) Vertreter: advotec.
(86) Internationale Anmeldenummer: PCT/EP2017/058134
(87) Internationale Veröffentlichungsnummer: WO 2018/184674

(56) Entgegenhaltungen:
- EP-A1- 1 102 360
- EP-A2- 1 526 626
- WO-A1-2015/018887
- WO-A1-2017/060172
- DE-A1-102016 103 919

## Beschreibung

Die Erfindung betrifft eine Kontaktvorrichtung für ein Schnellladesystem für elektrisch angetriebene Fahrzeuge, insbesondere Elektrobusse oder dergleichen, wobei die Kontaktvorrichtung einen Kontakteinheitenträger umfasst, wobei der Kontakteinheitenträger eine Kontakteinheit aufweist, wobei mit der Kontakteinheit ein Ladekontakt einer Ladekontaktvorrichtung des Schnellladesystems zur Ausbildung einer Kontaktpaarung kontaktierbar ist, wobei die Kontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Positioniereinrichtung einen Pantografen oder eine Schwinge aufweist, mittels dem bzw. der der Kontakteinheitenträger in zumindest vertikaler Richtung zur Ladekontaktvorrichtung positionierbar ist, wobei die Kontaktvorrichtung an dem Fahrzeug oder der Ladestation anordbar ist, wobei die Kontakteinheit ein Kontaktelement aufweist, wobei die Kontakteinheit eine Kontaktelementführung aufweist, wobei das Kontaktelement an der Kontaktelementführung in Richtung seiner Längsachse relativ zum Kontakteinheitenträger bewegbar ist, wobei die Kontakteinheit eine Anschlussleitung zur Verbindung mit dem Fahrzeug aufweist.

Derartige Kontakteinheiten sind bereits aus dem Stand der Technik bekannt, und werden regelmäßig als eine Baugruppe einer Kontaktvorrichtung zur Schnellladung elektrisch angetriebener Fahrzeuge an einer Haltestelle beziehungsweise einem Haltepunkt eingesetzt. Im Nahverkehr eingesetzte elektrisch angetriebene Fahrzeuge, wie beispielsweise Busse, können unter anderem über eine Oberleitung kontinuierlich mit elektrischer Energie versorgt werden. Dies setzt jedoch das Vorhandensein beziehungsweise den Unterhalt eines Oberleitungssystems voraus. Um die Vorteile eines elektrischen Antriebs auch ohne ein Oberleitungsnetz nutzen zu können, ist es bekannt, öffentliche Verkehrsmittel mit Batterien oder auch anderen Arten von Energiespeichern auszustatten. Ein Dauerbetrieb des Verkehrsmittels kann dadurch gewährleistet werden, dass während eines Halts des Verkehrsmittels an einer Haltestelle eine Schnellladung der Batterien erfolgt.

Hier sind aus dem Stand der Technik verschiedene Schnellladesysteme zur Herstellung einer elektrisch leitenden Verbindung zwischen einer stationären Ladestation im Bereich einer Haltestelle und einem Fahrzeug beziehungsweise Elektrobus bekannt. So kann an einem Elektrobus ein sogenannter Stromabnehmer mit einer Schleifleiste auf einem Dach eines Elektrobusses angeordnet sein, wobei im Bereich der Haltestelle eine in Fahrtrichtung des Elektrobusses längs verlaufende Schiene über einer Fahrbahn aufgehängt ist. Bei einem Halt des Elektrobusses an der Haltestelle wird der Stromabnehmer von dem Dach des Busses nach oben an die Schiene bewegt, wodurch eine elektrische Verbindung für die Dauer des vorgesehenen Halts des Elektrobusses an der Haltestelle hergestellt wird, sodass in diesem Zeitraum eine Schnellladung erfolgen kann. Insbesondere sind jedoch zwei voneinander unabhängige Stromabnehmer und entsprechende Kontaktierbereiche an der Schiene erforderlich, um einen Ladestromkreis ausbilden zu können.

Weiter können Kontaktelemente für beispielsweise eine Steuerleitung, Erdung oder eine Datenübertragung erforderlich sein. Es werden dann an einer Kontaktvorrichtung eines Stromabnehmers beziehungsweise Schnellladesystems mehrere Kontaktelemente angeordnet, die mit einer entsprechenden Anzahl in Fahrtrichtung des Elektrobusses angeordneter Ladekontaktelemente, die beispielsweise aus parallelen Schienen ausgebildet sein können, kontaktiert werden können. Eine größere Anzahl von Kontaktpaarungen kann somit hergestellt werden.

Aus der WO 2015/01887 A1 ist ein Schnellladesystem bekannt, bei dem eine dachförmige Ladekontaktvorrichtung von einem übereinstimmend ausgebildeten Kontakteinheitenträger einer Kontaktvorrichtung kontaktiert wird. Der Kontakteinheitenträger wird dadurch in eine Kontaktposition geführt, dass Kontaktelemente in dem Kontakteinheitenträger an den dachförmigen Schrägen der Ladekontaktvorrichtung entlang gleiten können, derart, dass der Kontakteinheitenträger in der Ladekontaktvorrichtung zentriert wird.

Die Kontaktelemente sind jeweils Teil einer Kontakteinheit, die an dem Kontakteinheitenträger fest montiert ist. Jede Kontakteinheit umfasst eine Kontaktelementführung innerhalb der das jeweilige Kontaktelement in Richtung seiner Längsachse relativ zum Kontakteinheitenträger bewegbar und federnd gelagert ist. Somit wird es möglich, einen eventuellen Winkelversatz beim Zusammenführen von Kontakteinheitenträger und Ladekontaktvorrichtung oder auch eine Neigung eines Busses an einer Haltestelle in Folge einer veränderten Zuladung oder einer Absenkung des Busses auszugleichen und stets eine sicherere Kontaktierung zur Verfügung zu stellen. Die jeweiligen Kontakteinheiten sind über jeweils eine oder mehrere Anschlussleitungen mit dem Fahrzeug verbunden. Insbesondere sind die Anschlussleitungen mittels Kabelschuhen mit der Kontaktelementführung verschraubt. Eine Stromübertragung erfolgt daher von beispielsweise einer elektrisch leitenden Schiene der Ladekontaktvorrichtung auf ein Kontaktelement und von diesem über einen Spalt, der eine Bewegung des Kontaktelements in der Kontaktelementführung erlaubt, auf die Kontaktelementführung, an die die Anschlussleitung geklemmt ist.

Zur Herstellung einer sicheren Stromübertragung von dem Kontaktelement auf die Kontaktelementführung wird Kontaktfett und eine Kontaktlamelle beziehungsweise ein Lamellenring verwendet. Nachteilig ist hier, dass der Kontakteinheitenträger Umwelteinflüssen, wie Schnee oder Regen sowie auch Dreck und Staub ausgesetzt ist, welcher am Kontaktelement beziehungsweise in den Spalt am Kontaktelement trotz Verwendung einer Ringdichtung eindringen kann. Dies kann in speziellen Fällen dazu führen, dass das Kontaktelement in der Kontaktelementführung blockiert beziehungsweise klemmt und so keine Kontaktierung oder auch eine undefinierte Kontaktierungsreihenfolge mit der Gefahr einer Ausbildung eines Lichtbogens möglich ist. Um ein Versagen bei kalter Witterung zu verhindern, kann es auch vorgesehen sein, eine Heizpatrone an der Kontaktelementführung anzuordnen. Weiter ist es bekannt, Kontaktelemente zu versilbern, um einen Übergangswiderstand im Bereich der Kontaktelementführung günstig zu beeinflussen. Sofern eine Kontakteinheit ausfällt, werden die übrigen Kontakteinheiten mit hohen Strömen durchflossen, was zu einer übermäßigen Erwärmung und zu einem Versagen des gesamten Schnellladesystems führen kann. Die Kontakteinheiten müssen daher in regelmäßigen Abständen ausgetauscht oder gewartet werden, damit eine verlässliche Kontaktierung sichergestellt werden kann.

Die EP 1 102 360 A1 offenbart eine wasserdichte Struktur für eine Kontaktvorrichtung für ein elektrisch angetriebenes Kraftfahrzeug.

Die EP 1 526 626 A2 betrifft ein Ladesystem für einen mobilen Roboter.

Der vorliegenden Erfindung liegt daher die Aufgabe zugrunde, eine Kontaktvorrichtung sowie ein Schnellladesystem vorzuschlagen, die beziehungsweise das einen kostengünstigen Betrieb des Verkehrsmittels und eine sichere Kontaktierung ermöglicht.

Diese Aufgabe wird durch eine Kontaktvorrichtung mit den Merkmalen des Anspruchs 1 und ein Schnellladesystem mit den Merkmalen des Anspruchs 18 gelöst.

Bei der erfindungsgemäßen Kontaktvorrichtung für ein Schnellladesystem für elektrisch angetriebene Fahrzeuge, insbesondere Elektrobusse oder dergleichen, wobei die Kontaktvorrichtung einen Kontakteinheitenträger umfasst, weist der Kontakteinheitenträger eine Kontakteinheit auf, wobei mit der Kontakteinheit ein Ladekontakt einer Ladekontaktvorrichtung des Schnellladesystems zur Ausbildung einer Kontaktpaarung kontaktierbar ist, wobei die Kontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Positioniereinrichtung einen Pantografen oder eine Schwinge aufweist, mittels dem bzw. der der Kontakteinheitenträger in zumindest vertikaler Richtung zur Ladekontaktvorrichtung positionierbar ist, wobei die Kontaktvorrichtung an dem Fahrzeug oder der Ladestation anordbar ist, wobei die Kontakteinheit ein Kontaktelement aufweist, wobei die Kontakteinheit eine Kontaktelementführung aufweist, wobei das Kontaktelement an der Kontaktelementführung in Richtung seiner Längsachse relativ zum Kontakteinheitenträger bewegbar ist, wobei die Kontakteinheit eine Anschlussleitung zur Verbindung mit dem Fahrzeug aufweist, wobei die Anschlussleitung an dem Kontaktelement befestigt ist.

Das an der Kontaktelementführung federnd gelagerte und entlang seiner Längsachse bewegbare Kontaktelement ist demnach im Wesentlichen direkt mit der Anschlussleitung verbunden, sodass ein Spalt zwischen der Kontaktelementführung und dem Kontaktelement nicht mehr zur Übertragung von Strömen genutzt werden muss. Auch ist dann die Anschlussleitung zusammen mit dem Kontaktelement bewegbar. Ein Spalt zwischen dem Kontaktelement und der Kontaktelementführung kann auch so groß bemessen sein, dass stets eine Bewegbarkeit des Kontaktelements sichergestellt ist. Auch kann dann auf einem Lamellenring, eine Ringdichtung und andere Bauteile, die eine Bewegbarkeit ungünstig beeinflussen, verzichtet werden. Anstelle eines leitenden Fettes oder tribologischer Kunststofflager kann ein auf eine Leichtgängigkeit des Kontaktelements abgestimmtes Fett bzw. entsprechende Lager verwendet werden. So ist es dann auch nicht mehr notwendig, Heizpatronen zu verwenden oder eine Erwärmung der Kontakteinheit in Folge eines Übergangswiderstands durch den Spalt zu berücksichtigen. Insgesamt können so Wartungsintervalle zur Prüfung und gegebenenfalls Austausch der Kontakteinheit wesentlich verlängert werden, wodurch das Verkehrsmittel kostengünstiger betrieben werden kann. Weiter ist eine Wahrscheinlichkeit eines Blockierens des Kontaktelements dann auch sehr gering, sodass das Schnellladesystem sicherer betrieben werden kann.

Erfindungsgemäß weist die Positioniereinrichtung einen Pantografen oder eine Schwinge auf, mittels dem beziehungsweise der der Kontakteinheitenträger in zumindest vertikaler Richtung zur Ladekontaktvorrichtung positionierbar ist, wobei die Kontaktvorrichtung an dem Fahrzeug oder an der Ladestation anordbar ist. Bei einer Schwinge kann ein ergänzendes Koppelgetriebe vorgesehen sein, welches den Kontakteinheitenträger relativ zu einer Ladekontaktvorrichtung stabilisiert beziehungsweise in der betreffenden Richtung ausrichtet. Ein Pantograf oder eine Schwinge beziehungsweise ein entsprechender mechanischer Antrieb ist besonders einfach und kostengünstig herstellbar. Ergänzend kann die Positioniereinrichtung auch eine Querführung aufweisen, mittels der der Kontakteinheitenträger quer relativ zur Ladekontaktvorrichtung beziehungsweise zu einer Fahrtrichtung des Fahrzeugs positioniert werden kann. Die Querführung kann an einem Fahrzeug oder einem Pantografen oder einer Schwinge der Positioniereinrichtung angeordnet sein. In beiden Fällen ist dann die Positioniereinrichtung beziehungsweise ein an der Positioniereinrichtung angeordneter Kontakteinheitenträger quer zur Fahrtrichtung des Fahrzeugs verschiebbar. Durch diese Verschiebbarkeit kann beispielsweise eine fehlerhafte Positionierung des Fahrzeugs an einer Haltestelle quer zur Fahrtrichtung ausgeglichen werden. Darüber hinaus können eventuelle Fahrzeugbewegungen in Folge eines einseitigen Absenkens des Fahrzeugs zum Ein- und Aussteigen von Personen so ausgeglichen werden, dass es zu keiner Verschiebung des Kontakteinheitenträgers relativ zur Ladekontaktvorrichtung in Querrichtung kommen kann. Die Kontaktvorrichtung kann beispielsweise auf einem Fahrzeugdach angeordnet sein, sodass der Kontakteinheitenträger von dem Fahrzeugdach ausgehend mittels der Positioniereinrichtung zu der Ladekontaktvorrichtung und zurück bewegt werden kann. Alternativ kann die Kontaktvorrichtung an der Ladestation angeordnet sein, wobei der Kontakteinheitenträger dann von einem Träger, wie beispielsweise einem Mast oder einer Brücke, an einer Haltestelle in Richtung auf ein Fahrzeugdach mit einer Ladekontaktvorrichtung und zurück bewegt werden kann.

Vorteilhaft kann das Kontaktelement bolzenförmig ausgebildet sein. Das Kontaktelement ist so besonders einfach herstellbar und es kann beispielsweise ein punktueller Kontakt mit einem Ladekontakt einer Ladekontaktvorrichtung ausgebildet werden. Auch ist es vorteilhaft, wenn das bolzenförmige Kontaktelement an seinem Kontaktende mit gerundeten Kanten oder vollständig abgerundet ausgebildet ist. Das Kontaktelement kann dann an einem Ladekontakt entlang bewegt werden, ohne dass es zu einer größeren mechanischen Beschädigung des Ladekontakts oder des Kontaktelements kommt. Alternativ kann das Kontaktelement auch mit einer anderen geeigneten Gestalt ausgebildet sein.

Weiter kann das Kontaktelement aus Kupfer bestehen und/oder unversilbert sein. Kupfer eignet sich besonders gut zur Verwendung für elektrisch leitende Bauteile, wobei die Anschlussleitung ebenfalls aus Kupfer bestehen kann. Da keine Stromübertragung mehr von einer Oberfläche des Kontaktelements auf die Kontaktelementführung erfolgt, kann auf ein Versilbern des Kontaktelements vollständig verzichtet werden, was die Herstellungskosten für das Kontaktelement wesentlich herabsetzt.

Die Kontaktelementführung kann dann als eine Führungsbuchse ausgebildet sein, die das Kontaktelement umgibt. Eine Führungsbuchse ist ebenfalls einfach durch Drehen herstellbar, sodass auch die Kontaktelementführung einfacher und kostengünstiger ausgebildet werden kann. Die Führungsbuchse, die auch selbstschmierend sein kann, kann beispielsweise ein Schraubgewinde aufweisen, mit dem die Führungsbuchse in den Kontakteinheitenträger einschraubbar und damit einfach montierbar ist. Zwischen der Führungsbuchse und dem Kontaktelement kann eine vergleichsweise große Spielpassung ausgebildet sein, da über die Führungsbuchse kein Strom abgeleitet wird. Ergänzend kann vorgesehen sein, dass die Führungsbuchse Lagerbuchsen aus geeigneten Materialien aufweist. So ist dann ein Material der Führungsbuchse prinzipiell beliebig auswählbar. Beispielsweise kann die Führungsbuchse dann auch aus Aluminium, einem Kunststoffmaterial oder einem anderen dielektrischen Material bestehen bzw. ein dielektrisches Material aufweisen, insbesondere da mit einer übermäßigen Erwärmung der Kontakteinheit in Folge eines Übergangswiderstandes nicht mehr zu rechnen ist. Eine oder mehrere Lagerbuchsen können aus einem Material mit guten Gleit- oder Dichtungseigenschaften bestehen, beispielsweise aus PTFE.

Weiter kann vorgesehen sein, dass eine Feder der Kontakteinheit eine Federkraft auf das Kontaktelement bewirkt. Eine federnde Lagerung des Kontaktelements kann durch eine einfache Druckfeder, insbesondere Spiralfeder, innerhalb des Kontaktelements beziehungsweise der Kontaktelementführung ausgeführt werden. In Folge dessen kann so ein punktueller Kontakt mit einem Ladekontakt unter einer Federvorspannung ausgebildet werden. Eine Federkraft kann so gewählt werden, dass das Kontaktelement stets aus der Kontaktführung heraus in eine vordere Endlage bewegt wird, wenn das Kontaktelement nicht mit einem Ladekontakt kontaktiert ist.

Die Kontakteinheit kann die Anschlussleitung und eine Verbindungseinrichtung umfassen, wobei die Verbindungseinrichtung das Kontaktelement und die Anschlussleitung verbinden kann. Die Verbindungseinrichtung ist dann so ausgebildet, dass das Kontaktelement direkt und unmittelbar über die Verbindungseinrichtung mit der Anschlussleitung verbunden ist. So kann sichergestellt werden, dass ein Strom von dem Kontaktelement direkt in die Anschlussleitung geleitet wird und nicht über andere Bauteile der Kontakteinheit fließt. Insbesondere kann die Verbindungseinrichtung so ausgebildet werden, dass die Anschlussleitung an dem Kontaktelement einfach befestigt werden kann.

Die Verbindungseinrichtung kann ein Verbindungselement aufweisen, wobei das Verbindungselement eine Ferrule ausbilden kann, die mit einem Ende der Anschlussleitung durch plastisches Verformen verbunden sein kann. Das Verbindungselement kann dann auch direkt mit dem Kontaktelement mittels Crimpen verbunden sein, wobei die Anschlussleitung dann in dem Verbindungselement endet. Auf die aus dem Stand der Technik bekannten Kabelschuhe kann dann verzichtet werden. Im Unterschied zu einem Kabelschuh kann über das Verbindungselement ein vergleichsweise höherer Strom übertragen werden. Die Ferrule kann in Art einer Hülse an dem Verbindungselement ausgebildet sein, wobei die Anschlussleitung besonders einfach montiert werden kann, indem ein Ende der Anschlussleitung in die Hülse eingesteckt, und die Hülse mittels eines Krimpwerkzeuges gekrimpt wird. Die Anschlussleitung kann dann so auch unlösbar mit dem Verbindungselement verbunden werden.

Das Verbindungselement und das Kontaktelement können jeweils Gewinde aufweisen, die dann miteinander verschraubt sind. Wenn das Verbindungselement beispielsweise stiftförmig ausgebildet ist, kann an einem Ende des Verbindungselements ein Gewinde ausgebildet sein, welches mit einem Gewinde an dem Kontaktelement durch Verschrauben einfach verbindbar ist. So ist es auch möglich das Kontaktelement wieder einfach von dem Verbindungselement mit der Anschlussleitung zu lösen, sofern das Kontaktelement aufgrund beispielsweise Verschleiß ausgetauscht werden muss. Um ein unerwünschtes Lösen der Gewindeverbindung zu verhindern, kann beispielsweise eine formschlüssige Gewindesicherung vorgesehen sein.

Weiter kann das Verbindungselement und das Kontaktelement jeweils Konusse aufweisen, die aneinander anliegende Kontaktflächen ausbilden. So können das Verbindungselement und das Kontaktelement auch mittels Reibschluss miteinander verbunden werden beziehungsweise großflächig miteinander in Kontakt gelangen. Die Konusse können auch dazu genutzt werden, eine eventuell vorhandene Gewindeverbindung zu sichern. Insbesondere kann jedoch eine vergleichsweise großflächige Kontaktfläche geschaffen werden, die eine elektrisch gut leitende Verbindung zwischen dem Verbindungselement und dem Kontaktelement sicherstellt. Das Verbindungselement kann beispielsweise an seinem Ende einen Kegelstumpf ausbilden.

Weiter kann das Verbindungselement mit dem Kontaktelement verklebt sein. Eine Klebeverbindung ist besonders einfach ausbildbar und kann auch zur Sicherung einer Gewindeverbindung verwendet werden. Die Klebeverbindung, beispielsweise mit elektrisch leitfähigen Klebermaterial, kann auch im Bereich von Kontaktflächen des Verbindungselements und des Kontaktelements ausgebildet sein. Ein unbeabsichtigtes Lösen des Kontaktelements von dem Verbindungselement kann so verhindert werden.

In einer weiteren Ausführungsform kann das Kontaktelement das Verbindungselement ausbilden. Das Verbindungselement kann dann an dem Kontaktelement angeformt sein. Insbesondere kann dann das Kontaktelement zusammen mit dem Verbindungselement einstückig ausgebildet sein. In einer besonders einfachen Ausführungsform kann das Kontaktelement an einem, einem Kontaktende gegenüberliegenden Verbindungsende eine eine Ferrule ausbildende Hülse ausbilden, in die die Anschlussleitung zur Verbindung mit dem Kontaktelement eingesteckt werden kann.

An dem Verbindungselement kann ein Absatz ausgebildet sein, der eine Bewegung des Kontaktelements relativ zur Kontaktelementführung begrenzt. Der Absatz kann beispielsweise ein abgesetzter Durchmesser an dem Verbindungselement sein. Der Absatz kann zur Anlage an der Kontaktelementführung ausgebildet sein, derart, dass das Kontaktelement nicht aus der Kontaktelementführung unbeabsichtigt herausfallen kann. So kann der Absatz eine vordere Endlage des Kontaktelements begrenzen.

Die Kontakteinheit kann eine Verschlusskappe aufweisen, die einen Anschlag für den Absatz ausbildet. Die Verschlusskappe kann als eine Verschlusskappe der Kontaktelementführung ausgebildet sein, die, wenn die Kontaktelementführung in Art einer Führungsbuchse ausgebildet ist, ein Ende der Führungsbuchse verschließt. In der Verschlusskappe kann eine Durchgangsbohrung ausgebildet sein, durch die die Anschlussleitung, das Kontaktelement oder ein Verbindungselement hindurch geführt sein kann. Der Absatz kann sich dann an die Verschlusskappe anlegen, sodass zwischen dem Absatz und der Verschlusskappe der Anschlag ausgebildet ist. Die Verschlusskappe kann auch mittels eines Gewindes an der gegebenenfalls vorhandenen Führungsbuchse verschraubt sein, sodass durch Öffnen der Verschlusskappe das Kontaktelement dann einfach aus der Führungsbuchse entnommen werden kann.

Es wird möglich mit der Kontakteinheit besonders hohe Ströme zu übertragen, wenn die Anschlussleitung einen Leiterquerschnitt von zumindest 50 mm², vorzugsweise 95 mm² aufweist. Bei den aus dem Stand der Technik bekannten Kontakteinheiten sind mehrere Anschlussleitungen über Kabelschuhe an einer Kontaktelementführung angeschraubt. Da durch die Befestigung der Anschlussleitung an dem Kontaktelement auf eine Verwendung von Kabelschuhen verzichtet werden kann, können auch höhere Ströme über die Anschlussleitung übertragen werden, weshalb ein derartig großer Leiterquerschnitt ausgewählt werden kann. Eine unerwünschte Erwärmung des Anschlussleiters kann so verhindert werden.

Die Kontakteinheit kann so ausgebildet sein, dass über die Kontakteinheit ein Strom von 500 A bis 1.000 A, vorzugsweise von 800 A bei einer Spannung von 750 V übertragbar ist. Folglich ist eine Leistung von 375 kW bis 750 kW, vorzugsweise von 600 kW über die Kontakteinheit übertragbar. Es kann daher dann auch ausreichend sein lediglich eine Anschlussleitung zur Verbindung mit dem Kontaktelement vorzusehen. Auch kann eine schnellere Ladung des Fahrzeugs erfolgen, da höhere Ströme in kürzerer Zeit übertragen werden können. Gegebenenfalls kann auch an einem Kontakteinheitenträger eine Anzahl der Kontakteinheiten vermindert werden, wodurch die Kontaktvorrichtung kostengünstiger herstellbar wird.

Die Kontaktvorrichtung kann auch eine Mehrzahl von Kontakteinheiten, beispielsweise für unterschiedliche Phasen, eine Erdung oder eine Datenübertragung aufweisen.

Zumindest zwei Kontaktelemente können relativ zu einer Oberfläche des Kontakteinheitenträgers in unterschiedlichen Höhen hervorstehen. So ist es dann möglich, bei der Ausbildung von zumindest zwei Kontaktpaarungen zwischen jeweils einem Kontaktelement und einem Ladekontakt eine definierte Reihenfolge bei der Herstellung der Kontaktpaarungen sicher zu stellen. Bei einem Zusammenführen von Kontakteinheitenträger und Ladekontaktvorrichtung wird dann eine Kontaktreihenfolge zwangsläufig immer eingehalten und aufgrund der geometrischen Anordnung der Kontaktelemente relativ zu der Oberfläche des Kontakteinheitenträgers sichergestellt. Eine unbeabsichtigte oder fehlerhafte Kontaktierung beziehungsweise Ausbildung von Kontaktpaarungen kann so leicht verhindert werden.

Der Kontakteinheitenträger kann ein Gehäuse aufweisen, welches aus zwei parallelen Seitenwänden aus einem dielektrischen Material ausgebildet ist, wobei die Seitenwände mittels Verbindungsbrücken miteinander verbunden sein können, wobei die Kontakteinheiten an den Verbindungsbrücken angeordnet sein können. Das Gehäuse kann beispielsweise aus einem Kunststoffmaterial ausgebildet sein, wobei die parallelen Seitenwände auch aus einem faserverstärkten Kunststoffmaterial ausgebildet sein können. Die Seitenwände sind so besonders einfach, stabil und kostengünstig herstellbar. Das Gehäuse kann dadurch ausgebildet werden, dass die Seitenwände mittels der Verbindungsbrücken verbunden sind. Die Verbindungsbrücken legen dann einen Relativabstand der Seitenwände fest und können beispielsweise mit den Seitenwänden verschraubt sein. Die Verbindungsbrücken können ebenfalls aus einem Kunststoffmaterial oder auch aus einem Metall bestehen und als ein einfacher, rechteckiger Streifen ausgebildet sein. Innerhalb der Verbindungsbrücken können Durchgangsbohrungen ausgebildet sein, in die dann jeweils eine Kontakteinheit nach Bedarf eingesetzt und befestigt ist. Eine besondere elektrische Isolierung der Kontakteinheiten oder der Verbindungsbrücken ist nicht erforderlich, wenn die Seitenwände aus dem dielektrischen Material ausgebildet sind.

Das erfindungsgemäße Schnellladesystem weist eine Ladekontaktvorrichtung und eine erfindungsgemäße Kontaktvorrichtung auf.

Die Ladekontaktvorrichtung kann eine Aufnahmeöffnung für den Kontakteinheitenträger ausbilden, wobei der Kontakteinheitenträger in die Aufnahmeöffnung der Ladekontaktvorrichtung einsetzbar sein kann. Dabei kann die Aufnahmeöffnung vorzugsweise V-förmig ausgebildet sein. Bei einer Relativabweichung des Kontakteinheitenträgers bei einem Zusammenführen von Kontakteinheitenträger und Ladekontaktvorrichtung zur Aufnahmeöffnung bewirkt dann die V-förmige Ausbildung der Aufnahmeöffnung eine Zentrierung des Kontakteinheitenträgers. Die Aufnahmeöffnung bildet daher eine Führung für den Kontakteinheitenträger aus, die eine Abweichung von einer Kontaktposition an der Ladekontaktvorrichtung ausgleichen kann.

Vorteilhafte Ausführungsformen des Schnellladesystems ergeben sich aus den auf den Anspruch 1 rückbezogenen Unteransprüchen.

Die Erfindung ist prinzipiell für jede Art von Elektrofahrzeug nutzbar, welches mit Batterien betrieben wird, die nachgeladen werden müssen.

Nachfolgend werden bevorzugte Ausführungsformen der Erfindung unter Bezugnahme auf die beigefügten Zeichnungen näher erläutert.

Es zeigen:
- **Fig. 1:**: einen Kontakteinheitenträger nach dem Stand der Technik in einer Seitenansicht;
- **Fig. 2:**: eine Kontakteinheit in einer perspektivischen Ansicht;
- **Fig. 3:**: eine Teilschnittansicht der Kontakteinheit aus Fig. 2;
- **Fig. 4:**: eine Schnittansicht einer Verbindungseinrichtung aus **Fig. 3****;**
- **Fig. 5:**: eine perspektivische Ansicht eines Kontakteinheitenträgers.

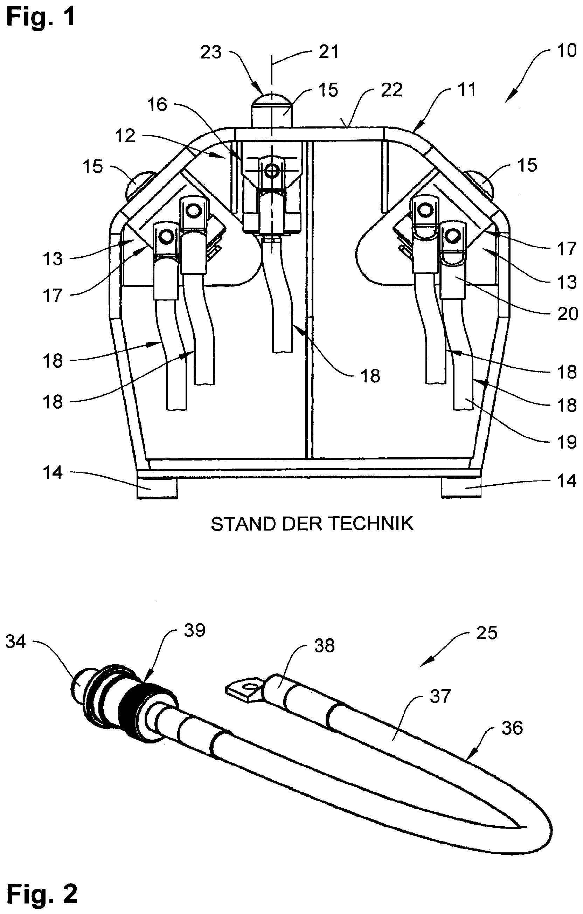

Die **Fig. 1** zeigt einen Kontakteinheitenträger 10, wie er aus dem Stand der Technik bekannt ist. Der Kontakteinheitenträger 10 ist Bestandteil einer hier nicht näher dargestellten Kontaktvorrichtung und an einer Positioniereinrichtung der Kontaktvorrichtung angeordnet, sodass der Kontakteinheitenträger 10 relativ zu einer Ladekontaktvorrichtung, die hier ebenfalls nicht dargestellt ist, bewegbar und mit dieser kontaktierbar ist. Der Kontakteinheitenträger 10 ist aus einem Gehäuse 11 mit Kontakteinheiten 12, 13 und Führungselementen 14 zur Befestigung an einer Querführung der Positioniereinrichtung ausgebildet. Die Kontakteinheiten 12 und 13 weisen jeweils ein Kontaktelement 15, Kontaktelementführungen 16 beziehungsweise 17 und Anschlussleitungen 18 auf.

Die Anschlussleitungen sind aus Leitern 19 mit Kabelschuhen 20 ausgebildet, wobei die Kabelschuhe 20 an der Kontaktelementführung 16 beziehungsweise 17 zur Herstellung eines elektrischen Verbindungskontakts verschraubt sind. Die Kontaktelemente 15 sind in Richtung ihrer Längsachse 21 in der Kontaktelementführung 16 bewegbar, überragen eine Oberfläche 22 des Gehäuses 11 und sind mit einer Federkraft beaufschlagt. Zur Ausbildung einer Kontaktpaarung wird ein Kontaktende 23 mit einem Ladekontakt der Ladekontaktvorrichtung kontaktiert, wobei das Kontaktelement 15 dann ein Stück weit in die Kontaktelementführung 16 hinein gedrückt wird. Eine Stromübertragung erfolgt dann von dem Ladekontakt zu dem Kontaktelement 15 und von diesem auf die Kontaktelementführung 16 beziehungsweise 17, die ihrerseits mit der Anschlussleitung 18 verbunden ist. Insbesondere an den Kontaktelementführungen 17 sind zwei Anschlussleitungen 18 befestigt, um hohe Ströme über die Anschlussleitungen 18 mit abführen zu können.

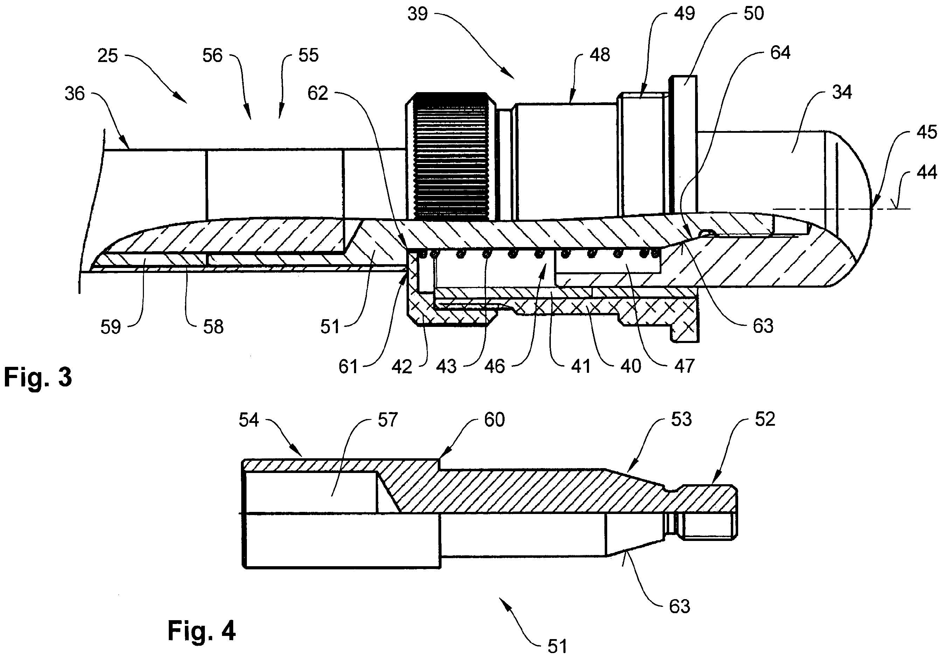

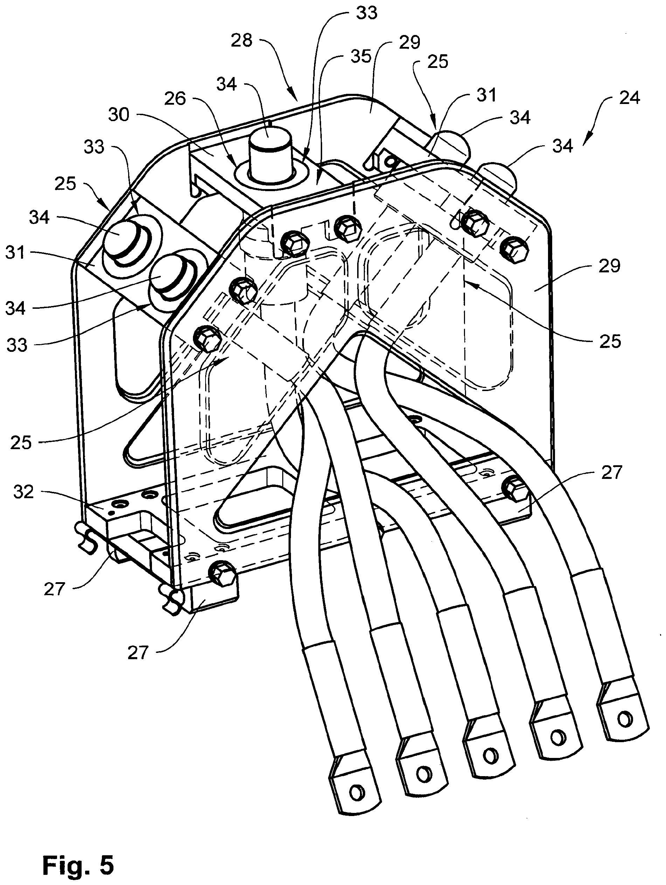

Eine Zusammenschau der **Fig. 2** bis **5** zeigt einen Kontakteinheitenträger 24 mit Kontakteinheiten 25, 26 in verschiedenen Ansichten. Der Kontakteinheitenträger 24 weist ebenfalls Führungselemente 27 zur Befestigung und Führung an einer hier nicht näher dargestellten Querführung einer Positioniereinrichtung einer Kontaktvorrichtung auf. Der Kontakteinheitenträger 24 weist ein Gehäuse 28 auf, welches aus zwei parallelen Seitenwänden 29 aus faserverstärkten Kunststoff ausgebildet ist. Die Seitenwände 29 sind mittels Verbindungsbrücken 30, 31, 32 miteinander verbunden, wobei in den Verbindungsbrücken 30 und 31 jeweils Durchgangsbohrungen 33 zur Aufnahme und Befestigung der Kontakteinheiten 25 beziehungsweise 26 ausgebildet sind. Kontaktelemente 34 der Kontakteinheiten 25, 26 stehen über eine Oberfläche 35 des Gehäuses 28 derart hervor, dass die Kontaktelemente 34 mit den nicht hier dargestellten Ladekontakten einer Ladekontaktvorrichtung elektrisch kontaktierbar sind.

Die in den **Fig. 2** bis **4** dargestellte Kontakteinheit 25 ist aus einer Anschlussleitung 36 mit einem isolierten Leiter 37 und einem Kabelschuh 38 zur elektrisch leitenden Verbindung der Kontakteinheit 25 mit einem Fahrzeug sowie dem Kontaktelement 34 und einer Kontaktelementführung 39 ausgebildet. Die Kontaktelementführung 39 ist aus einer Führungsbuchse 40 mit Lagerbuchsen 41 und 42 sowie einer Verschlusskappe 42 und einer Feder 43 ausgebildet. Das Kontaktelement 35 ist in Richtung seiner Längsachse 44 innerhalb der Führungsbuchse 40 bewegbar. Ein Kontaktende 45 des Kontaktelements 34 ist vollständig abgerundet ausgebildet. Ein Verbindungsende 46 des Kontaktelements 34 weist eine Ausnehmung 47, in die die Feder 34 eingesetzt ist, auf. Die Verschlusskappe 42 ist auf die Führungsbuchse 40 aufgeschraubt, sodass die Führungsbuchse verschlossen ist und die Feder 43 zwischenliegend der Verschlusskappe 42 und dem Verbindungsende 46 angeordnet ist, wobei die Feder 43 eine Federkraft auf das Kontaktelement 34 bewirken kann. Weiter ist auf einer Außenfläche 48 der Führungsbuchse 40 ein Gewinde 49 ausgebildet, mittels dem die Führungsbuchse 40 in die Durchgangsbohrung 33 eingeschraubt und damit an der Verbindungsbrücke 31 befestigt ist. Ein Bund 50 an der Führungsbuchse 40 dient zur Festlegung einer Einbaulage der Führungsbuchse 40.

Weiter umfasst die Kontakteinheit 25 ein Verbindungselement 51, welches in das Kontaktelement 34 eingeschraubt ist. Das Verbindungselement 51 weist demnach ein Gewinde 52, einen Konus 53 und eine Ferrule 54 auf, die durch Ausbildung einer Crimpverbindung 55 mit einem Ende 56 des Leiters 37 mit diesem verbunden ist. Die Ferrule 54 ist durch eine Bohrung 57 in dem Verbindungselement 51 ausgebildet. Das Ende 56 ist abisoliert und in die Bohrung 57 eingesteckt sowie mit einem hier nicht dargestellten Crimpwerkzeug mit der Ferrule 54 verklemmt. Ein Schrumpfschlauch 59 deckt eine Isolation 58 und die Crimpverbindung 55 ab.

An dem Verbindungselement 51 ist weiter ein Absatz 60 ausgebildet, der einen Anschlag 61 mit der Verschlusskappe 42 ausbildet und so eine Lage des Kontaktelements 34 relativ zu der Oberfläche 35 begrenzt. Das Verbindungselement 51 ist durch eine Durchgangsbohrung 62 in der Verschlusskappe 42 hindurch geführt und mit dem Gewinde 52 in das Kontaktelement 34 eingeschraubt. Der Konus 53 bildet eine Kontaktfläche 63 mit einem Innenkonus 64 des Kontaktelements 34 aus. Um ein Lösen des Verbindungselements 51 aus dem Kontaktelement 34 zu verhindern, kann eine Sicherung mittels Klebermaterial vorgesehen sein. Insbesondere durch die Ausbildung der Crimpverbindung 55 sowie über die Kontaktfläche 63 und das Gewinde 52 wird es möglich, vergleichsweise hohe Ströme von dem Kontaktelement 34 in den Leiter 37 zu übertragen, ohne dass es zu einer Kontaktunterbrechung, wie es aus dem Stand der Technik bekannt ist, kommen kann. Gleichzeitig kann verhindert werden, dass das Kontaktelement 34 in der Kontaktelementführung 39 verklemmt, da eine geeignete Spielpassung zwischen dem Kontaktelement 34 und der Führungsbuchse 40 ausgebildet werden kann, die dann nicht mehr zur Übertragung von Strömen dienen muss. Weiter kann auch auf ein Versilbern des Kontaktelements verzichtet werden. Darüber hinaus kann eine Anzahl an Anschlussleitungen 36 reduziert werden, da die Anschlussleitungen 36 nun mit einem vergleichsweise größeren Querschnitt verwendet werden können.

## Patentansprüche

1. Kontaktvorrichtung für ein Schnellladesystem für elektrisch angetriebene Fahrzeuge, insbesondere Elektrobusse oder dergleichen, wobei die Kontaktvorrichtung einen Kontakteinheitenträger (24) umfasst, wobei der Kontakteinheitenträger eine Kontakteinheit (25, 26) aufweist, wobei mit der Kontakteinheit ein Ladekontakt einer Ladekontaktvorrichtung des Schnellladesystems zur Ausbildung einer Kontaktpaarung kontaktierbar ist, wobei die Kontaktvorrichtung eine Positioniereinrichtung umfasst, wobei mittels der Positioniereinrichtung der Kontakteinheitenträger relativ zu der Ladekontaktvorrichtung positionierbar ist, derart, dass eine elektrisch leitende Verbindung zwischen einem Fahrzeug und einer stationären Ladestation ausbildbar ist, wobei die Positioniereinrichtung einen Pantografen oder eine Schwinge aufweist, mittels dem bzw. der der Kontakteinheitenträger in zumindest vertikaler Richtung zur Ladekontaktvorrichtung positionierbar ist, wobei die Kontaktvorrichtung an dem Fahrzeug oder der Ladestation anordbar ist, wobei die Kontakteinheit ein Kontaktelement (34) aufweist, wobei die Kontakteinheit eine Kontaktelementführung (39) aufweist, wobei das Kontaktelement an der Kontaktelementführung in Richtung seiner Längsachse (44) relativ zum Kontakteinheitenträger bewegbar ist, wobei die Kontakteinheit eine Anschlussleitung (36) zur Verbindung mit dem Fahrzeug aufweist,
**dadurch gekennzeichnet,**
**dass** die Anschlussleitung an dem Kontaktelement befestigt ist.

2. Kontaktvorrichtung nach Anspruch 1,
**dadurch gekennzeichnet,**
**dass** das Kontaktelement (34) bolzenförmig ausgebildet ist.

3. Kontaktvorrichtung nach Anspruch 1 oder 2,
**dadurch gekennzeichnet,**
**dass** das Kontaktelement (34) aus Kupfer besteht und/oder unversilbert ist.

4. Kontaktvorrichtung nach einem der vorangehenden Ansprüche, **dadurch gekennzeichnet,**
**dass** die Kontaktelementführung (39) als eine Führungsbuchse (40) ausgebildet ist, die das Kontaktelement (34) umgibt.

5. Kontaktvorrichtung nach einem der vorangehenden Ansprüche, **dadurch gekennzeichnet,**
**dass** eine Feder (43) der Kontakteinheit (25, 26) eine Federkraft auf das Kontaktelement (34) bewirkt.

6. Kontaktvorrichtung nach einem der vorangehenden Ansprüche, **dadurch gekennzeichnet,**
**dass** die Kontakteinheit (25, 26) die Anschlussleitung (36) und eine Verbindungseinrichtung umfasst, wobei die Verbindungseinrichtung das Kontaktelement (34) und die Anschlussleitung verbindet.

7. Kontaktvorrichtung nach einem der vorangehenden Ansprüche, **dadurch gekennzeichnet,**
**dass** die Verbindungseinrichtung ein Verbindungselement (51) aufweist, wobei das Verbindungselement eine Ferrule (54) ausbildet, die mit einem Ende (56) der Anschlussleitung (36) durch plastisches Verformen verbunden ist.

8. Kontaktvorrichtung nach Anspruch 7,
**dadurch gekennzeichnet,**
**dass** das Verbindungselement (51) und das Kontaktelement (34) jeweils Gewinde (52) aufweisen, die miteinander verschraubt sind.

9. Kontaktvorrichtung nach Anspruch 7 oder 8,
**dadurch gekennzeichnet,**
**dass** das Verbindungselement (51) und das Kontaktelement (34) jeweils Konusse (53, 64) aufweisen, die aneinander anliegende Kontaktflächen (63) ausbilden.

10. Kontaktvorrichtung nach einem der Ansprüche 7 bis 9,
**dadurch gekennzeichnet,**
**dass** das Verbindungselement (51) mit dem Kontaktelement (34) verklebt ist.

11. Kontaktvorrichtung nach Anspruch 7,
**dadurch gekennzeichnet,**
**dass** das Kontaktelement das Verbindungselement ausbildet.

12. Kontaktvorrichtung nach einem der Ansprüche 7 bis 11,
**dadurch gekennzeichnet,**
**dass** an dem Verbindungselement (51) ein Absatz (60) ausgebildet ist, der eine Bewegung des Kontaktelements (34) relativ zur Kontaktelementführung (39) begrenzt.

13. Kontaktvorrichtung nach Anspruch 12,
**dadurch gekennzeichnet,**
**dass** die Kontakteinheit (25, 26) eine Verschlusskappe (42) aufweist, die einen Anschlag (61) für den Absatz (60) ausbildet.

14. Kontaktvorrichtung nach einem der vorangehenden Ansprüche,
**dadurch gekennzeichnet,**
**dass** die Anschlussleitung (36) einen Leiterquerschnitt von zumindest 50 mm², vorzugsweise 95 mm² aufweist.

15. Kontaktvorrichtung nach einem der vorangehenden Ansprüche,
**dadurch gekennzeichnet,**
**dass** die Kontakteinheit (25, 26) so ausgebildet ist, dass über die Kontakteinheit ein Strom von 500 A bis 1000 A, vorzugsweise von 800 A bei einer Spannung von 750 V übertragbar ist.

16. Kontaktvorrichtung nach einem der vorangehenden Ansprüche ,
**dadurch gekennzeichnet,**
**dass** zumindest zwei Kontaktelemente (34) relativ zu einer Oberfläche (35) des Kontakteinheitenträgers (24) in unterschiedlichen Höhen hervorstehen.

17. Kontaktvorrichtung nach einem der vorangehenden Ansprüche ,
**dadurch gekennzeichnet,**
**dass** der Kontakteinheitenträger (24) ein Gehäuse (28) aufweist, welches aus zwei parallelen Seitenwänden (29) aus einem dielektrischen Material ausgebildet ist, wobei die Seitenwände mittels Verbindungsbrücken (30, 31, 32) miteinander verbunden sind, wobei die Kontakteinheiten (25, 26) an den Verbindungsbrücken angeordnet sind.

18. Schnellladesystem mit einer Ladekontaktvorrichtung und einer Kontaktvorrichtung nach einem der Ansprüche 1 bis 17.

19. Schnellladesystem nach Anspruch 18,
**dadurch gekennzeichnet,**
**dass** die Ladekontaktvorrichtung eine Aufnahmeöffnung für den Kontakteinheitenträger (24) ausbildet, wobei der Kontakteinheitenträger in die Aufnahmeöffnung der Ladekontaktvorrichtung einsetzbar ist.

## Claims

1. A contact device for a fast charging system for electrically driven vehicles, in particular electric busses or the like, the contact device having a contact unit carrier (24), the contact unit carrier having a contact unit (25, 26), a charging contact of a charging contact device of the fast charging system being electrically connectable to the contact unit to form a contact pair, the contact device comprising a positioning device, the contact unit carrier being positionable relative to the charging contact device by means of the positioning device in such a manner that an electrically conductive connection is formed between a vehicle and a fixed charging station, the positioning device comprising a pantograph or a pole by means of which the contact unit carrier can be positioned in at least the vertical direction to the charging contact device, the contact device being positionable on the vehicle or the charging station, the contact unit having a contact element (34), the contact unit having a contact element guide (39), the contact element being displaceable relative to the contact unit carrier on the contact element guide in the direction of its longitudinal axis (44), the contact unit having a connecting lead (36) for being connected to the vehicle,
**characterised in that**
the connecting lead is attached to the contact element.

2. The contact device according to claim 1,
**characterised in that**
the contact element (34) is bolt-shaped.

3. The contact device according to claim 1 or 2,
**characterised in that**
the contact element (34) is made of copper and/or is not plated with silver.

4. The contact device according to any one of the preceding claims, **characterised in that**
the contact element guide (39) is realized as a guide bush (40) surrounding the contact element (34).

5. The contact device according to any one of the preceding claims, **characterised in that**
a spring (43) of the contact unit (25, 26) exerts a spring force on the contact element (34).

6. The contact device according to any one of the preceding claims, **characterised in that**
the contact unit (25, 26) comprises the connecting lead (36) and a connecting device, the connecting device connecting the contact element (34) and the connecting lead.

7. The contact device according to any one of the preceding claims, **characterised in that**
the connecting device has a connecting element (51), the connecting element forming a ferrule (54) connected to one end (56) of the connecting lead (36) by plastic deformation.

8. The contact device according to claim 7,
**characterised in that**
the connecting element (51) and the contact element (34) each have threads (52) that are screwed to each other.

9. The contact device according to claim 7 or 8,
**characterised in that**
the connecting element (51) and the contact element (34) each have cones (53, 64) that form contact surfaces (63) in contact with each other.

10. The contact device according to any one of claims 7 to 9, **characterised in that**
the connecting element (51) is glued to the contact element (34).

11. The contact device according to claim 7,
**characterised in that**
the contact element forms the connecting element.

12. The contact device according to any one of claims 7 to 11, **characterised in that**
a shoulder (60) limiting movement of the contact element (34) relative to the contact element guide (39) is formed on the connecting element (51).

13. The contact device according to claim 12,
**characterised in that**
the contact unit (25, 26) has a cap (42) which forms a stop (61) for the shoulder (60).

14. The contact device according to any one of the preceding claims, **characterised in that**
the connecting lead (36) has a conductor cross-section of at least 50 mm², preferably 95 mm².

15. The contact device according to any one of the preceding claims, **characterised in that**
the contact unit (25, 26) is configured in such a manner that a current of 500 A to 1000 A, preferably of 800 A at a voltage of 750 V is transmittable via the contact unit.

16. The contact device according to any one of the preceding claims, **characterised in that**
at least two contact elements (34) protrude at different heights relative to a surface (35) of the contact unit carrier (24).

17. The contact device according to any one of claims 16 to 18, **characterised in that**
the contact unit carrier (24) has a housing (28) composed of two parallel side walls (29) made of a dielectric material, the side walls being connected to each other via connecting bridges (30, 31, 32), the contact units (25, 26) being disposed on the connecting bridges.

18. A fast charging system comprising a charging contact device and a contact device according to any one of claims 1 to 17.

19. The fast charging system according to claim 18,
**characterised in that**
the charging contact device forms a receiving opening for the contact unit carrier (24), the contact unit carrier being insertable into the receiving opening of the charging contact device.

## Revendications

1. Dispositif de contact pour un système de charge turbo pour des véhicules à moteur électrique, notamment des busses électrique ou d'autres choses semblables, le dispositif de contact ayant un porteur d'unité de contact (24), le porteur d'unité de contact ayant une unité de contact (25, 26), un contact de charge d'un dispositif de contact de charge du système de charge turbo pouvant être relié électriquement à l'unité de contact afin de former une paire de contact, le dispositif de contact comprenant un dispositif de positionnement, le porteur d'unité de contact pouvant être positionné par rapport au dispositif de contact de charge au moyen du dispositif de positionnement de telle manière qu'une connexion électroconductrice est formée entre un véhicule et une station de recharge fixe, le dispositif de positionnement comprenant un pantographe ou un bras oscillant au moyen duquel le porteur d'unité de contact peut être positionné au moins en sens vertical, le dispositif de contact pouvant être positionné sur le véhicule ou la station de recharge, l'unité de contact ayant un élément de contact (34), l'unité de contact ayant un guidage d'élément contact (39), l'élément de contact pouvant être déplacé par rapport au porteur d'unité de contact sur le guidage d'élément de contact en sens de son axe longitudinal (44), l'unité de contact ayant un câble de raccordement (36) pour être relié au véhicule,
**caractérisé en ce que**
le câble de raccordement est fixé à l'élément de contact.

2. Dispositif de contact selon la revendication 1,
**caractérisé en ce que**
l'élément de contact (34) est en forme de boulon.

3. Dispositif de contact selon la revendication 1 ou la revendication 2, **caractérisé en ce que**
l'élément de contact (34) est fait de cuivre et/ou n'est pas argenté.

4. Dispositif de contact selon l'une quelconque des revendications précédentes,
**caractérisé en ce que**
le guidage d'élément de contact (39) est réalisé comme bague de guidage (40) encerclant l'élément de contact (34).

5. Dispositif de contact selon l'une quelconque des revendications précédentes,
**caractérisé en ce**
**qu'**un ressort (43) de l'unité de contact (25, 26) exerce une force de ressort sur l'élément de contact (34).

6. Dispositif de contact selon l'une quelconque des revendications précédentes,
**caractérisé en ce que**
l'unité de contact (25, 26) comprend le câble de raccordement (36) et un dispositif de connexion, le dispositif de connexion reliant l'élément de contact (34) et le câble de raccordement.

7. Dispositif de contact selon l'une quelconque des revendications précédentes,
**caractérisé en ce que**
le dispositif de connexion a un élément de connexion (51), l'élément de connexion formant une virole (54) reliée à une extrémité (56) du câble de raccordement (36) par déformation plastique.

8. Dispositif de contact selon la revendication 7,
**caractérisé en ce que**
l'élément de connexion (51) et l'élément de contact (34) ont chaque un filet (52) qui sont visés l'un à l'autre.

9. Dispositif de contact selon la revendication 7 ou la revendication 8, **caractérisé en ce que**
l'élément de connexion (51) et l'élément de contact (34) ont chaque des cônes (53, 64) qui forment des surfaces de contact (63) en contact l'un avec l'autre.

10. Dispositif de contact selon l'une quelconque des revendications 7 à 9,
**caractérisé en ce que**
l'élément de connexion (51) est collé à l'élément de contact (34).

11. Dispositif de contact selon la revendication 7,
**caractérisé en ce que**
l'élément de contact forme l'élément de connexion.

12. Dispositif de contact selon l'une quelconque des revendications 7 à 11,
**caractérisé en ce**
**qu'**un épaulement (60) limitant le mouvement de l'élément de contact (34) par rapport au guidage d'élément de contact (39) est formé sur l'élément de connexion (51).

13. Dispositif de contact selon la revendication 12,
**caractérisé en ce que**
l'unité de contact (25, 26) a un capuchon (42) qui forme un arrêt (61) pour l'épaulement (60).

14. Dispositif de contact selon l'une quelconque des revendications précédentes,
**caractérisé en ce que**
le câble de raccordement (36) a une coupe transversale de conducteur d'au moins 50 mm², de préférence 95 mm².

15. Dispositif de contact selon l'une quelconque des revendications précédentes,
**caractérisé en ce que**
l'unité de contact (25, 26) est configurée de telle manière qu'un courant de 500 A à 1000 A, de préférence de 800 A à un voltage de 750 V est transmissible par l'unité de contact.

16. Dispositif de contact selon l'une quelconque des revendications précédentes,
**caractérisé en ce**
**qu'**au moins deux éléments de contact (34) font saillie à des hauteurs différentes par rapport à une surface (35) du porteur d'unité de contact (24).

17. Dispositif de contact selon l'une quelconque des revendications 16 à 18,
**caractérisé en ce que**
le porteur d'unité de contact (24) a un boîtier (28) fait de deux parois latérales (29) parallèles, les parois latérales étant reliées l'une à l'autre par des points de liaison (30, 31, 32), les unités de contact (25, 26) étant disposées sur les points de liaison.

18. Système de charge turbo comprenant un dispositif de contact de charge et un dispositif de contact selon l'une quelconque des revendications 1 à 17.

19. Système de charge turbo selon la revendication 18,
**caractérisé en ce que**
le dispositif de contact de charge forme une ouverture de réception pour le porteur d'unité de contact (24), le porteur d'unité de contact pouvant être inséré dans l'ouverture de réception du dispositif de contact de charge.
